# EUROPÄISCHE PATENTSCHRIFT

(11) **EP 3 445 644 B1**
(45) Veröffentlichungstag und Bekanntmachung des Hinweises auf die Patenterteilung: **26.02.2020**
(21) Anmeldenummer: 17708729.3
(22) Anmeldetag: 01.03.2017
(51) Int. Cl.: B62J 9/00, B62J 7/04, B62J 1/28

(54) **TOP-CASE-ANORDNUNG**
TOP-CASE ARRANGEMENT
ARRANGEMENT POUR TOP-CASE

(30) Priorität: 21.04.2016 DE 102016206776
(43) Veröffentlichungstag der Anmeldung: 27.02.2019
(73) Patentinhaber: Bayerische Motoren Werke Aktiengesellschaft, 80809 München (DE)
(72) Erfinder: REINHART, Peter, 82380 Peissenberg (DE); SIEVERS-PAULSEN, Johann, 85354 Freising (DE)
(86) Internationale Anmeldenummer: PCT/EP2017/054695
(87) Internationale Veröffentlichungsnummer: WO 2017/182184

(56) Entgegenhaltungen:
- DE-A1-102013 207 190
- DE-B3-102012 202 274
- JP-U- S59 104 880
- US-A1- 2015 217 663

## Beschreibung

Die Erfindung betrifft eine Top-Case-Anordnung gemäß dem Oberbegriff des Patentanspruchs 1, sowie ein mit einer derartigen Top-Case-Anordnung ausgestattetes Fahrzeug.

Top-Cases mit integrierten Armlehnen sind beispielsweise aus den USamerikanischen Patentschriften US 4,915,187 B und US 4,600,208 B bekannt. Die Armlehnen sind fahrzeugfest verbaut, so dass derartige Top-Case Anordnungen dem Nutzer keine Möglichkeit bieten, bei Bedarf die Armlehnen wahlweise zu entfernen.

Weitere Top-Cases sind unter anderem aus der DE 10 2012 202 274 B3, welche die Merkmale der Präambel von Anspruch 1 zeigt, sowie der DE 10 2013 207 190 A1 bekannt.

Aufgabe der Erfindung ist es daher, Armlehnen bereitzustellen, die an einem derartigen Fahrzeug leicht und auch für ungeübte Nutzer bei Bedarf montierbar beziehungsweise demontierbar sind und das Fahrzeug auch im demontierten Zustand für den Nutzer sicher nutzbar bleibt.

Diese Aufgabe wird gelöst durch eine Top-Case-Anordnung mit den Merkmalen des Patentanspruchs 1 sowie einem Fahrzeug gemäß dem Patentanspruch 8. Vorteilhafte Ausführungsformen ergeben sich aus den jeweils abhängigen Patentansprüchen.

Demnach wird eine Top-Case-Anordnung für ein Fahrzeug, insbesondere ein Motorrad oder ein motorradähnliches Fahrzeug, mit einem Top-Case und einem unterhalb des Top-Case angeordneten Grundträger bereitgestellt, wobei der Grundträger zum Verbinden mit einer Fahrzeugstruktur ausgebildet ist und zwei Anbindungsabschnitte zur wahlweisen Anbindung von zwei Armlehnen an den Grundträger aufweist. Außerdem weist das Top-Case im Bereich einer Unterseite mindestens eine Einbuchtung auf, in welcher die beiden Anbindungsabschnitte des Grundträgers angeordnet sind.

Dies bedeutet, dass der Grundträger zumindest zwei Anbindungsabschnitte umfasst, die jeweils zur wahlweisen Anbindung einer der beiden Armlehnen ausgebildet sind. Das Top-Case ist derart ausgestaltet, dass dieses auf seiner Unterseite, also der nach außen gewandten Oberfläche eines Bodens, oder zumindest im Bereich dieser Unterseite, die eine oder mehrere Einbuchtungen aufweist. Als Einbuchtung ist beispielsweise eine Vertiefung, eine Hinterschneidung, ein Rücksprung oder eine Ausnehmung des Bodens zu verstehen, die in der ansonsten beispielsweise koffer- oder kistenförmigen Kontur des Top-Case vorgesehen ist und ein Aufnahmevolumen zur Aufnahme eines oder beider Anbindungsabschnitte bereitstellt.

Das Aufnahmevolumen ist demnach ein von der Einbuchtung definierter Raum, der einerseits durch die von der Einbuchtung bereitgestellte Wandung definiert und andererseits gegenüber der Umgebung geöffnet ist. Die Einbuchtung kann beispielsweise durch über die Unterseite überstehende Seitenwände des Top-Case definiert werden. Hierbei stehen die Seitenwände beispielsweise in abwärts- beziehungsweise nach unten gerichteter Richtung über.

Grundsätzlich ist das von der Einbuchtung definierte Aufnahmevolumen von einem eigentlichen Gepäckvolumen des Top-Case zu unterscheiden, wobei in dem Gepäckvolumen Gepäck angeordnet werden kann und von dem Top-Case umschlossen ist.

In jedem Fall sind zumindest im verbauten oder verbaubaren Zustand der Top-Case-Anordnung die beiden Anbindungsabschnitte innerhalb dieser mindestens einen Einbuchtung positioniert. Demnach können die beiden Anbindungsabschnitte in derselben Einbuchtung oder jeweils in einer eigenen Einbuchtung angeordnet sein. Der restliche Grundträger kann entweder ebenfalls in der einen oder den zwei Einbuchtungen, oder aber in einer zusätzlichen Einbuchtung der Unterseite des Bodens oder außerhalb derartiger Einbuchtungen angeordnet sein.

Die Top-Case-Anordnung bietet die besondere Möglichkeit, dass die Anbindungsabschnitte derart in der mindestens einen Einbuchtung angeordnet sind, dass diese zumindest in einer Seitenrichtung des Top-Case nicht über dessen äußere Kontur überstehen. Zusätzlich können die Anbindungsabschnitte auch vollständig in der mindestens einen Einbuchtung angeordnet sein, so dass diese auch auf der Unterseite des Top-Case nicht aus der zugehörigen Einbuchtung und somit über die Kontur des Top-Case herausragen.

Auf diese Art und Weise wird die Möglichkeit einer dauerhaften Befestigung des Grundträgers am Fahrzeug geschaffen, unabhängig davon, ob die Armlehnen montiert sind oder nicht. Für den Fall, dass keine Armlehnen mit den Anbindungsabschnitten verbunden werden, sondern lediglich der Grundträger am Fahrzeug vorgesehen ist, wird ein Überstand der Anbindungsabschnitte über das Top-Case hinaus vermieden und somit eine Behinderung für den Nutzer oder eine Verletzungsgefahr durch andernfalls überstehende Anbindungsabschnitte wirkungsvoll eliminiert.

Im Bedarfsfall können die Armlehnen ohne weitere aufwendige Maßnahmen an der Top-Case-Anordnung befestigt werden. Eine Demontage beziehungsweise Montage der Armlehnen kann somit ohne gleichzeitige Demontage beziehungsweise Montage des Grundträgers erfolgen und ist somit auch für ungeübte Nutzer ohne größeren Aufwand möglich. Der Grundträger kann stattdessen Teil der Top-Case-Anordnung und somit im Nutzerbetrieb jederzeit am Fahrzeug montiert bleiben.

Gemäß einer Ausführungsform bildet das Top-Case in einem nicht-montierten Zustand der Armlehnen mittels der mindestens einen Einbuchtung eine Verkleidung zumindest der beiden Anbindungsabschnitte des Grundträgers.

Beispielsweise kann das Top-Case hierzu die zwei beschriebenen Seitenwände aufweisen, die zur Bildung der Einbuchtung über die Unterseite des Top-Case überstehen und zusätzlich jeweils einen abnehmbaren Wandabschnitt umfassen, der zumindest eine seitlich Verkleidung eines der beiden Anbindungsabschnitte bildet. Dies bedeutet, dass die Seitenwände des Top-Case aufgrund ihres Überstandes über die Unterseite hinaus die Einbuchtung seitlich begrenzen und somit das Aufnahmevolumen definieren. Die Wandabschnitte sind als abnehmbare Teilabschnitte der Seitenwände zu verstehen. Für die (zumindest teilweise) in der Einbuchtung angeordneten Aufnahmeabschnitte bedeutet dies, dass diese zumindest durch die nach unten überstehenden Seitenwände in seitlicher Richtung verkleidet und geschützt sind.

Alle räumlichen Angaben, insbesondere "oben", "vorn", "hinten", "unten" und "seitlich", sind bezüglich einer Ausrichtung der Top-Case-Anordnung in einem verbauten Zustands am Fahrzeug zu verstehen und entsprechend dessen Orientierung. Zum Beispiel sind demnach die Seitenwände des Top-Case gemäß den entsprechenden Fahrzeugseiten ausgerichtet.

Des Weiteren können diese abnehmbaren Wandabschnitte jeweils mittels einer kraftschlüssigen und/oder formschlüssigen Verbindung lösbar mit der jeweils zugeordneten Seitenwand (also genauer: des jeweils verbleibenden Rests der Seitenwand) des Top-Case verbunden sein. Dies bietet die Möglichkeit, die seitliche Verkleidung der Anbindungsabschnitte bei Bedarf zu entfernen und diese zugänglich zu machen, insbesondere zum Verbinden mit jeweils einer Armlehne. In diesem Fall muss lediglich der jeweilige, lösbare Wandabschnitt entfernt werden. Der Wandabschnitt ist dementsprechend als abnehmbare Blende ausgebildet.

Außerdem ist es möglich, dass die Unterseite des Top-Case eine oder mehrere weitere Ausnehmungen zur zumindest abschnittsweisen Aufnahme des Grundträgers umfasst. Dies bedeutet, dass der Grundträger auf der Unterseite des Top-Case in die Ausnehmung(en) vollständig oder lediglich mit weiteren Abschnitten eingesetzt werden kann, so dass eine kompakte und modulare Top-Case-Anordnung bereitgestellt wird. Auch diese Ausnehmungen können als weitere Vertiefungen, Einbuchtungen oder Hinterschneidungen ausgeführt sein.

Vorzugsweise ist der Grundträger zum Verbinden mit einer als Heckrahmen ausgeführten Fahrzeugstruktur ausgebildet. Auch kann das Top-Case ebenfalls mit dem Grundträger verbunden, insbesondere an diesem befestigt werden.

Weiterhin kann jeder der beiden Anbindungsabschnitte zum formschlüssigen und/oder kraftschlüssigen Anbinden jeweils einer Armlehne ausgestaltet sein. Als Armlehne sind beispielsweise Armlehnenstummel zu verstehen, die mit dem Grundträger verbunden und über diesen an der Fahrzeugstruktur befestigt sind.

Beispielsweise sind die beiden Anbindungsabschnitte an einander entgegengesetzten Enden des Grundträgers angeordnet. Die Armlehnen können dementsprechend zu beiden Seiten des Top-Case und somit auf beiden Seiten des Fahrzeugs beziehungsweise zu beiden Seiten eines auf dem Fahrzeug sitzenden Fahrzeugnutzers angebracht werden.

Ferner wird ein Fahrzeug, insbesondere Motorrad oder motorradähnliches Fahrzeug, mit einer Top-Case-Anordnung vorgeschlagen, wobei die Top-Case-Anordnung gemäß der Beschreibung ausgebildet ist. Als motorradähnliches Fahrzeug sind insbesondere alle Einspurfahrzeuge aber auch Mehrspurfahrzeuge jeweils mit entsprechendem sattelförmigen Sitz oder Sitzbank für den Nutzer zu verstehen, besonderes bevorzugt zweirädrige, dreirädrige oder vierrädrige Motorroller und Scooter, aber auch Quads oder Trikes.

Die Erfindung wird nachfolgend anhand von Ausführungsbeispielen unter Bezugnahme auf die Zeichnungen näher beschrieben. Es zeigen:
Fig. 1 eine schematische Frontalansicht einer Top-Case-Anordnung gemäß der Beschreibung,
Fig. 2 eine teilweise Schnittansicht einer Ausführungsform der Top-Case-Anordnung,
Fig. 3 eine perspektivische Teil-Ansicht der Top-Case Anordnung aus Fig. 2 mit montiertem Wandabschnitt, und
Fig. 4 eine perspektivische Teil-Ansicht der Top-Case Anordnung aus Fig. 2 und 3 mit abgenommenem Wandabschnitt.

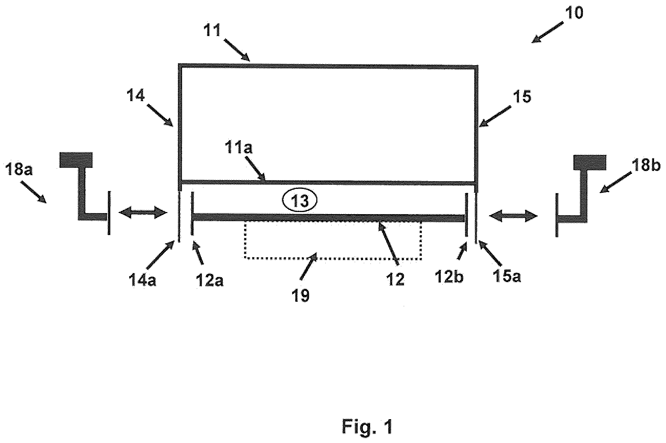

In Fig. 1 ist in rein schematischer und stark vereinfachter Darstellung eine Frontalansicht einer Top-Case-Anordnung 10 abgebildet. Die Top-Case-Anordnung 10 ist für ein Fahrzeug (nicht dargestellt), wie beispielsweise ein Motorrad oder ein motorradähnliches Fahrzeug, vorgesehen und weist hierzu ein Top-Case 11 und einen unterhalb des Top-Case 11 angeordneten Grundträger 12 auf.

Der Grundträger 12 ist zum Verbinden mit einer lediglich angedeuteten Fahrzeugstruktur 19 ausgebildet und weist zudem zwei Anbindungsabschnitte 12a,12b zur wahlweisen Anbindung von zwei Armlehnen 18a,18b an den Grundträger 12 auf. Die beiden Anbindungsabschnitte 12a,12b sind an einander entgegengesetzten Enden des Grundträgers 12 angeordnet. Der Übersichtlichkeit halber sind die zwei Armlehnen 18a,18b beabstandet zu den Anbindungsabschnitten 12a,12b dargestellt, jedoch sind diese im verbauten Zustand direkt mit den Anbindungsabschnitten 12a,12b verbunden. Jeder der beiden Anbindungsabschnitte 12a,12b ist entsprechend zum formschlüssigen und/oder kraftschlüssigen Anbinden jeweils einer Armlehne 18a, 18b ausgebildet.

Das Top-Case 11 weist außerdem im Bereich einer Unterseite 11a eine Einbuchtung 13 auf, die ein Aufnahmevolumen definieren, in welchem die beiden Anbindungsabschnitte 12a,12b angeordnet sind. In der dargestellten Ausführungsform ist darüber hinaus auch der gesamte Grundträger 12 in der Einbuchtung 13 angeordnet.

Die Einbuchtung 13 ist derart ausgestaltet, dass das Top-Case 11 in einem nicht-montierten Zustand der Armlehnen (wie dargestellt) mittels der Einbuchtung 13 eine Verkleidung der beiden Anbindungsabschnitte 12a, 12b des Grundträgers 12 bildet. Die Anbindungsabschnitte 12a,12b sind somit zumindest von oben und den beiden Seiten durch eine Wandung der Einbuchtung 13 verkleidet und geschützt. Eine Behinderung oder eine Verletzungsgefahr für einen Nutzer durch die Anbindungsabschnitte 12a,12b wird verhindert.

Hierzu sind zwei Seitenwände 14,15 des Top-Case 11 vorgesehen, die zur Bildung der Einbuchtung 13 über die Unterseite 11a des Top-Case 11 nach unten überstehen und hierzu jeweils einen Wandabschnitt 14a,15a umfassen. Jeder der Wandabschnitte 14a, 15a bildet jeweils die seitlich Verkleidung eines der beiden Anbindungsabschnitte 12a,12b.

Die Wandabschnitte 14a,15a können zum Beispiel jeweils lösbar mittels einer kraftschlüssigen und/oder formschlüssigen Verbindung mit der jeweils zugeordneten Seitenwand 14,15 des Top-Case 11 verbunden sein.

Des Weiteren ist der Grundträger 13 zum Verbinden mit einer als Heckrahmen ausgeführten Fahrzeugstruktur 19 ausgebildet.

Für den dargestellten Fall, dass keine Armlehnen 18a,18b mit den Anbindungsabschnitten verbunden werden, sondern lediglich der Grundträger 12 am Fahrzeug vorgesehen ist, wird ein Überstand der Anbindungsabschnitte in seitlicher Richtung über das Top-Case 11 hinaus vermieden und somit - wie beschrieben - eine Behinderung für den Nutzer oder eine Verletzungsgefahr durch andernfalls überstehenden Anbindungsabschnitte wirkungsvoll eliminiert.

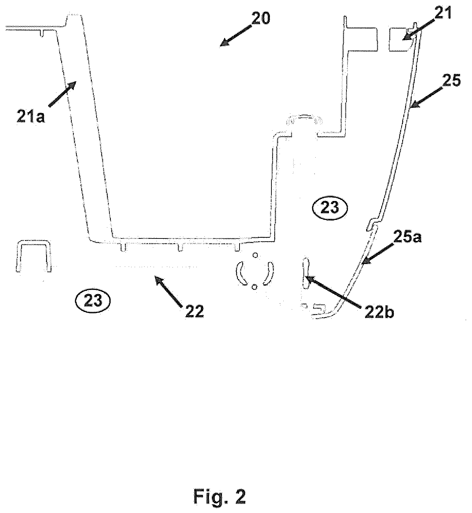

Fig. 2 zeigt eine weitere, detaillierter dargestellte Ausführungsform einer Top-Case-Anordnung 20 in einer teilweisen Schnittansicht ebenfalls aus Frontalperspektive. Das Top-Case 21 der Top-Case-Anordnung 20 weist eine Unterseite 21a auf, die eine lokal unterschiedlich stark ausgeprägte Einbuchtung 23 aufweist. In dieser Einbuchtung 23 ist zumindest teilweise ein Grundträger 22 angeordnet, der an seinem seitlichen Ende einen Aufnahmeabschnitt 22b aufweist. Dieser 22b wird durch die Unterseite 21a des Top-Case 21 sowie durch den seitlichen Wandabschnitt 25a verkleidet und ist somit innerhalb der Einbuchtung 23 angeordnet. Der Wandabschnitt 25a stellt einen über die Unterseite 21a überstehenden Teilabschnitt 25a einer Seitenwand 25 des Top-Case 21 dar und setzt diese 25 nach unten zur Erzeugung einer stetigen Seitenkontur des Top-Case 21 fort.

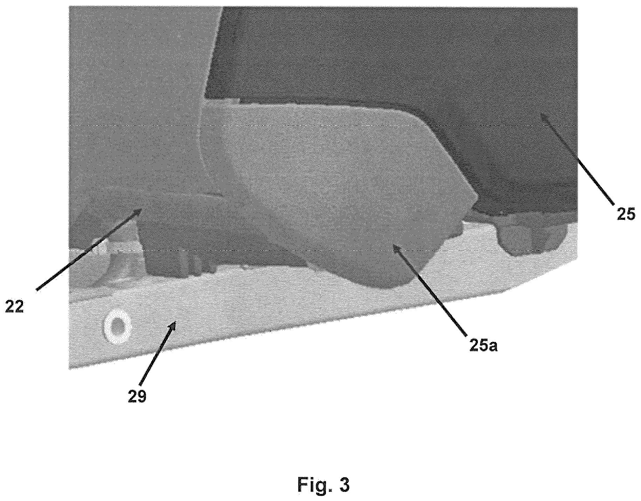

In Fig. 3 ist eine perspektivische Teil-Ansicht der Top-Case-Anordnung 20 aus Fig. 2 mit montiertem Wandabschnitt 25a dargestellt, wobei die Top-Case-Anordnung 20 mit einer als Heckrahmen ausgeführten Fahrzeugstruktur 29 verbunden ist. Zu erkennen ist, dass der Wandabschnitt 25a einen Teilabschnitt der Seitenwand 25 bildet und den dahinterliegenden Anbindungsabschnitt 22b (nicht sichtbar) des Grundträgers 22 zumindest seitlich verkleidet.

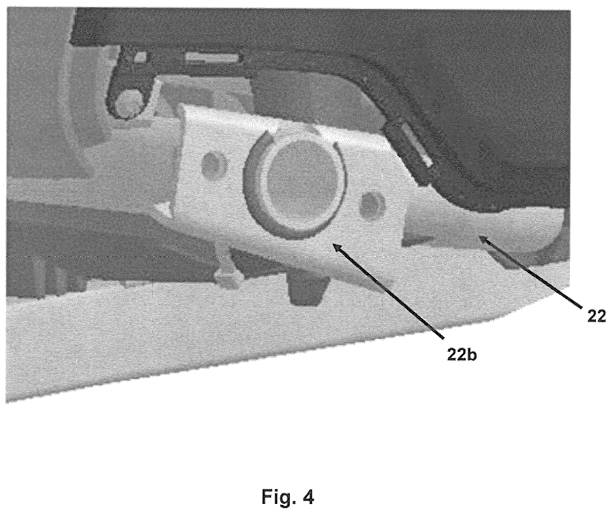

Fig. 4 zeigt eine perspektivische Teil-Ansicht der Top-Case Anordnung 20 aus den Fig. 2 und 3 mit abgenommenem Wandabschnitt 25a (nicht dargestellt). Entsprechend ist der nicht-verkleidete Anbindungsabschnitt 22b des Grundträgers 22 zu erkennen, an den eine Armlehne 18b (nicht dargestellt) angebracht werden kann.

## Patentansprüche

1. Top-Case-Anordnung für ein Fahrzeug, insbesondere ein Motorrad oder ein motorradähnliches Fahrzeug, mit einem Top-Case (11,21) und einem unterhalb des Top-Case (11,21) angeordneten Grundträger (12,22), wobei der Grundträger (12,22) zum Verbinden mit einer Fahrzeugstruktur (19,29) ausgebildet ist, **dadurch gekennzeichnet, dass** der Grundträger zwei Anbindungsabschnitte (12a,12b,22b) zur wahlweisen Anbindung von zwei Armlehnen (18a,18b) an den Grundträger (12,22) aufweist und dass das Top-Case (11,21) im Bereich einer Unterseite (11a,21a) mindestens eine Einbuchtung (13,23) aufweist, in welcher die beiden Anbindungsabschnitte (12a,12b,22b) angeordnet sind.

2. Top-Case-Anordnung nach Anspruch 1, **dadurch gekennzeichnet, dass** die Einbuchtung (13,23) derart ausgestaltet ist, dass das Top-Case (11,21) in einem nicht-montierten Zustand der Armlehnen (18a,18b) mittels der mindestens einen Einbuchtung (13,23) eine Verkleidung zumindest der beiden Anbindungsabschnitte (12a,12b,22b) des Grundträgers (12,22) bildet.

3. Top-Case-Anordnung nach Anspruch 2, **dadurch gekennzeichnet, dass** das Top-Case (11,21) zwei Seitenwände (14,15,25) aufweist, die zur Bildung der Einbuchtung (13,23) über die Unterseite (11a,21a) des Top-Case (11,21) überstehen und jeweils einen Wandabschnitt (14a,15a,25a) umfassen, der zumindest eine seitlich Verkleidung eines der beiden Anbindungsabschnitte (12a,12b,22b) bildet.

4. Top-Case-Anordnung nach Anspruch 3, **dadurch gekennzeichnet, dass** die Wandabschnitte (14a,15a,25a) jeweils lösbar mittels einer kraftschlüssigen und/oder formschlüssigen Verbindung mit der jeweils zugeordneten Seitenwand (14,15,25) des Top-Case (11,21) verbunden sind.

5. Top-Case-Anordnung nach mindestens einem der Ansprüche 1 bis 4, **dadurch gekennzeichnet, dass** der Grundträger (12,22) zum Verbinden mit einer als Heckrahmen ausgeführten Fahrzeugstruktur (19,29) ausgebildet ist.

6. Top-Case-Anordnung nach mindestens einem der Ansprüche 1 bis 5, **dadurch gekennzeichnet, dass** jeder der beiden Anbindungsabschnitte (12a,12b,22b) zum formschlüssigen und/oder kraftschlüssigen Anbinden jeweils einer Armlehne (18a, 18b) ausgebildet ist.

7. Top-Case-Anordnung nach mindestens einem der Ansprüche 1 bis 6, **dadurch gekennzeichnet, dass** die beiden Anbindungsabschnitte (12a,12b,22b) an einander entgegengesetzten Enden des Grundträgers (12,22) angeordnet sind.

8. Fahrzeug, insbesondere Motorrad oder motorradähnliches Fahrzeug, mit einer Top-Case-Anordnung (10,20), **dadurch gekennzeichnet, dass** die Top-Case-Anordnung (10,20) nach einem der Ansprüche 1 bis 7 ausgebildet ist.

## Claims

1. A top case arrangement for a vehicle, especially a motorcycle or a vehicle similar to a motorcycle, with a top case (11, 21) and a base support (12, 22) arranged beneath the top case (11, 21), wherein the base support (12, 22) is designed for connecting to a vehicle structure (19, 29), **characterised in that** the base support has two attachment portions (12a, 12b, 22b) for optionally attaching two armrests (18a, 18b) to the base support (12, 22), and **in that** the top case (11, 21) in the region of an underside (11a, 21a) has at least one indentation (13, 23) in which the two attachment portions (12a, 12b, 22b) are arranged.

2. A top case arrangement according to Claim 1, **characterised in that** the indentation (13, 23) is configured in such a way that the top case (11, 21) in a non-mounted state of the armrests (18a, 18b) forms a lining at least of the two attachment portions (12a, 12b, 22b) of the base support (12, 22) by means of the at least one indentation (13, 23).

3. A top case arrangement according to Claim 2, **characterised in that** the top case (11, 21) has two side walls (14, 15, 25) which to form the indentation (13, 23) project across the underside (11a, 21a) of the top case (11, 21) and in each case comprise a wall portion (14a, 15a, 25a) which forms at least one lateral lining of one of the two attachment portions (12a, 12b, 22b).

4. A top case arrangement according to Claim 3, **characterised in that** the wall portions (14a, 15a, 25a) are in each case connected detachably by means of a non-positive and/or positive connection to the respective associated side wall (14, 15, 25) of the top case (11, 21).

5. A top case arrangement according to at least one of Claims 1 to 4, **characterised in that** the base support (12, 22) is designed for connecting to a vehicle structure (19, 29) which is embodied as a rear frame.

6. A top case arrangement according to at least one of Claims 1 to 5, **characterised in that** each of the two attachment portions (12a, 12b, 22b) is designed for the positive and/or non-positive attachment of one armrest (18a, 18b) in each case.

7. A top case arrangement according to at least one of Claims 1 to 6, **characterised in that** the two attachment portions (12a, 12b, 22b) are arranged on opposing ends of the base support (12, 22).

8. A vehicle, especially motorcycle or vehicle similar to a motorcycle, with a top case arrangement (10, 20), **characterised in that** the top case arrangement (10, 20) is designed in accordance with one of Claims 1 to 7.

## Revendications

1. Agencement de Top-Case destiné à un véhicule, en particulier, à un motocycle ou à un véhicule similaire à un motocycle comportant un Top-Case (11, 21) et un support de base (12, 22) installé au-dessous du Top-Case (11, 21), le support de base (12, 22) étant réalisé pour permettre une liaison avec une structure (19, 29) du véhicule,
**caractérisé en ce que**
le support de base comporte deux segments de liaison (12a, 12b, 22b) permettant de relier sélectivement deux accoudoirs (18a, 18b) au support de base (12, 22), et **en ce que** le Top-Case (11, 21) comporte, dans la zone d'un côté inférieur (11a, 21a) au moins un renfoncement (13, 23) dans lequel les deux segments de liaison (12a, 12b, 22b) sont installés.

2. Agencement de Top-Case conforme à la revendication 1,
**caractérisé en ce que**
le renfoncement (13, 23) est conformé de sorte que le Top-Case (11, 21) forme, lorsque les accoudoirs (18a, 18b) ne sont pas montés, au moyen du renfoncement (13, 23) un habillage d'au moins les deux segments de liaison (12a, 12b, 22b) du support de base (12, 22).

3. Agencement de Top-Case conforme à la revendication 2,
**caractérisé en ce que**
le Top-Case (11, 21) comporte deux parois latérales (14, 15, 25) qui, pour permettre de former le renfoncement (13, 23) dépassent du côté inférieur (11a, 21a) du Top-Case (11, 21), et comportent chacune un segment de paroi (14a, 15a, 25a) qui forme au moins un habillage latéral de l'un des deux segments de liaison (12a, 12b, 22b).

4. Agencement de Top-Case conforme à la revendication 3,
**caractérisé en ce que**
les segments de paroi (14a, 15a, 25a) sont respectivement reliés de manière amovible par une liaison par la force et/ou par une liaison par la forme avec la paroi latérale respectivement associée (14, 15, 25) du Top-Case (11, 21).

5. Agencement de Top-Case conforme à au moins l'une des revendications 1 à 4,
**caractérisé en ce que**
le support de base (12, 22) est réalisé pour permettre une liaison avec une structure (19, 29) du véhicule réalisé sous la forme d'un châssis arrière.

6. Agencement de Top-Case conforme à au moins l'une des revendications 1 à 5,
**caractérisé en ce que**
chacun des deux segments de liaison (12a, 12b, 22b) est réalisé pour permettre une liaison par la forme et/ou une liaison par la force d'un accoudoir (18a, 18b) respectif.

7. Agencement de Top-Case conforme à au moins l'une des revendications 1 à 6,
**caractérisé en ce que**
les deux segments de liaison (12a, 12b, 22b) sont respectivement installés à des extrémités opposées du support de base (12, 22).

8. Véhicule, en particulier, motocycle ou véhicule motorisé similaire équipé d'un agencement de Top-Case (10, 20),
**caractérisé en ce que**
l'agencement de Top-Case (10, 20) est réalisé conformément à l'une des revendications 1 à 7.
